**Europäisches Patentamt**

**European Patent Office**

**Office européen des brevets**

(19)

(11) Veröffentlichungsnummer : **0 402 428 B1**

(12)
# EUROPÄISCHE PATENTSCHRIFT

(45) Veröffentlichungstag der Patentschrift :
**23.12.92 Patentblatt 92/52**

(51) Int. Cl.$^5$ : **B60Q 1/06**

(21) Anmeldenummer : **89910068.9**

(22) Anmeldetag : **19.09.89**

(86) Internationale Anmeldenummer :
**PCT/DE89/00594**

(87) Internationale Veröffentlichungsnummer :
**WO 90/07440 12.07.90 Gazette 90/16**

(54) **SCHEINWERFER FÜR KRAFTFAHRZEUGE.**

(30) Priorität : **30.12.88 DE 3844269**

(43) Veröffentlichungstag der Anmeldung :
**19.12.90 Patentblatt 90/51**

(45) Bekanntmachung des Hinweises auf die
Patenterteilung :
**23.12.92 Patentblatt 92/52**

(84) Benannte Vertragsstaaten :
**DE FR GB IT SE**

(56) Entgegenhaltungen :
**EP-A- 120 442**
**EP-A- 138 217**
**DE-U- 8 713 122**
**GB-A- 2 170 587**

(73) Patentinhaber : **ROBERT BOSCH GMBH**
**Postfach 30 02 20**
**W-7000 Stuttgart 30 (DE)**

(72) Erfinder : **ZILLGITT, Ulrich**
**Blumenstrasse 22/1**
**W-7064 Remshalden 1 (DE)**
Erfinder : **SPEER, Harald**
**Max-Eyth-Strasse 1**
**W-7141 Benningen (DE)**
Erfinder : **HAUG, Kurt**
**Ganghofer Strasse 43**
**W-7410 Reutlingen (DE)**
Erfinder : **EBINGER, Georg**
**Jahnstrasse 35**
**W-7408 Kusterdingen (DE)**
Erfinder : **MILLERS, Miervaldis**
**Zaisentalstrasse 70/2**
**W-7410 Reutlingen (DE)**
Erfinder : **HASSELMANN, Heinrich**
**Kürnsteigweg 90**
**W-7401 Walddorf-Häslach (DE)**

EP 0 402 428 B1

**Beschreibung**

Die Erfindung betrifft einen Scheinwerfer für Kraftfahrzeuge nach der Gattung des Anspruchs 1.

Ein gattungsgemäßer Scheinwerfer ist durch die GB-A 2 170 587 bekannt. Dieser Scheinwerfer weist einen in einem Scheinwerfergehäuse verstellbar angeordneten Reflektor auf. Zur Einstellung des Reflektors ist eine Stellvorrichtung vorgesehen, die ein Gehäuse aufweist, in dem ein Elektromotor und ein Untersetzungsgetriebe angeordnet sind. Das Untersetzungsgetriebe besteht aus einem vom Elektromotor angetriebenen kleinen Schneckenrad und einem großen Zahnrad mit Stirnverzahnung, durch das ein Stellelement zur Verstellung des Reflektors betätigt wird, wobei der Reflektor in einer horizontalen Ebene schwenkbar ist. Das Gehäuseteil der Stellvorrichtung ist im Scheinwerfergehäuse angeordnet und gegen Verdrehen um die Achse des Stellelements, gegen Verschieben in Achsrichtung und quer dazu gesichert mit dem Scheinwerfergehäuse verbunden. Das Stellelement ist als ein Gewindebolzen ausgebildet, der durch eine Gewindebohrung im Zahnrad hindurchgeschraubt ist, wobei das Zahnrad axial festgelegt aber um die Achse des Stellelements drehbar gelagert ist. Bei einer Drehbewegung des Zahnrads um die Achse des Stellelements wird dabei das Stellelement axial bewegt und der Reflektor horizontal geschwenkt. Im Gehäuseteil sind Mittel zur axialen Fixierung und zur Lagerung des Zahnrads erforderlich, wodurch der Aufbau der Stellvorrichtung aufwendig ist.

Durch die DE-A-2 30 48 751 ist ein Scheinwerfer bekannt, der zur Einstellung der Neigung des Reflektors eine elektromotorische Stellvorrichtung aufweist. Die Stellvorrichtung ist in einem eigenen Gehäuse untergebracht und weist einen Elektromotor und ein Untersetzungsgetriebe auf. Das Gehäuse mit der Stellvorrichtung ist mit einem Tragrahmen an der Rückseite des Scheinwerfergehäuses angebracht. Das Untersetzungsgetriebe der Stellvorrichtung ist über ein Koppelglied mit dem Reflektor verbunden. Der Nachteil dieses Scheinwerfers besteht darin, daß wegen des separat angebauten Gehäuses der Stellvorrichtung ein sehr tiefer Einbauraum für den Scheinwerfer erforderlich ist. Um die Stellvorrichtung vor Verschmutzung zu schützen sind Abdichtungsmaßnahmen am Gehäuse erforderlich. Weitere Nachteile bestehen darin, daß das Scheinwerfergehäuse zur Anbringung des Gehäuses erforderliche besondere Befestigungselemente aufweisen muß und für den elektrischen Anschluß des Elektromotors eine gesonderte Kabelführung erforderlich ist.

Vorteile der Erfindung

Der erfindungsgemäße Scheinwerfer mit den Merkmalen des Anspruchs 1 hat demgegenüber den Vorteil, daß die Stellvorrichtung zur Verstellung der Neigung des Reflektors aus wenigen zu montierenden Einzelteilen einfach aufgebaut und im Scheinwerfergehäuse angeordnet ist. Das Zahnrad ist über das Gewinde am Gehäuseteil gelagert und zugleich wird über das Gewinde die Drehbewegung des Zahnrads in eine axiale Stellbewegung umgewandelt.

In den abhängigen Ansprüchen sind vorteilhafte Ausgestaltungen und Weiterbildungen des Scheinwerfers angegeben.

Durch die Ausbildung der Verbindung des Untersetzungsgetriebes mit dem Gelenkteil nach Anspruch 3 ist ein vergrößerter Verstellbereich im Scheinwerfer erreicht. Durch die Weiterbildung nach Anspruch 4 oder 8 wird erreicht, daß eine Grundeinstellung des Scheinwerfers von außerhalb des Scheinwerfergehäuses möglich ist. Durch die Weiterbildung nach Anspruch 10 wird die Stellung des mit dem Scheinwerferreflektor verbundenen Teils des Untersetzungsgetriebes auf einfache Weise erfaßt. Im Anspruch 11 ist eine einfache und sicher wirkende Kontaktierung des Elektromotors und eines Potentiometers gekennzeichnet.

Zeichnung

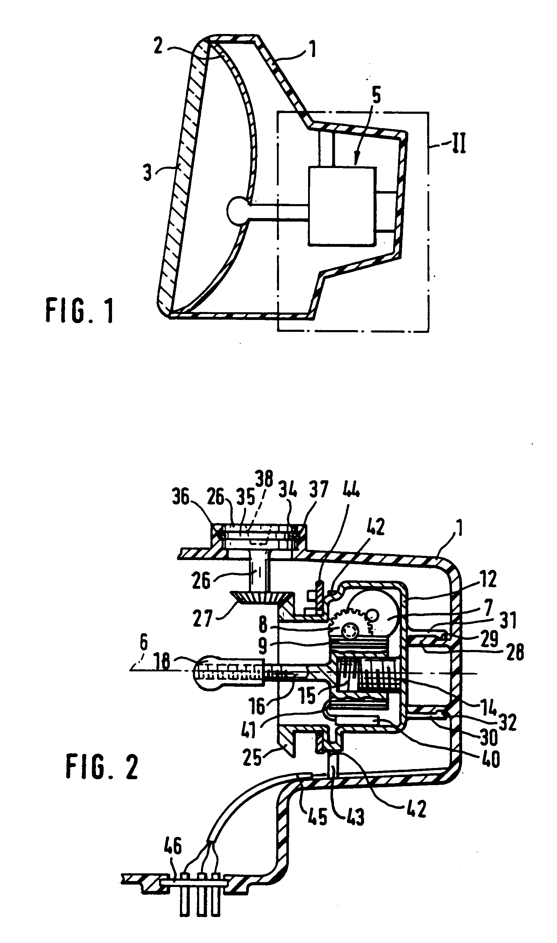

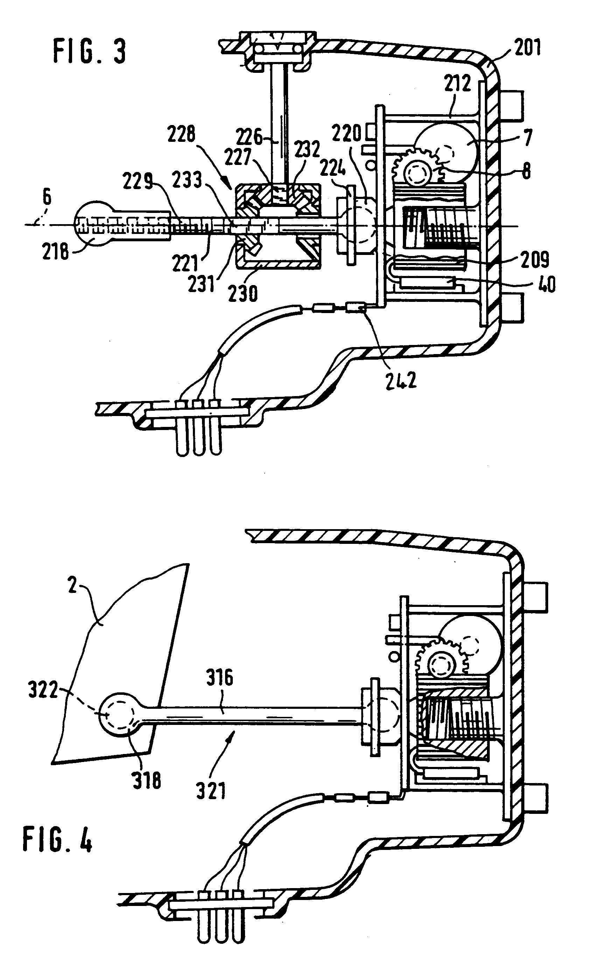

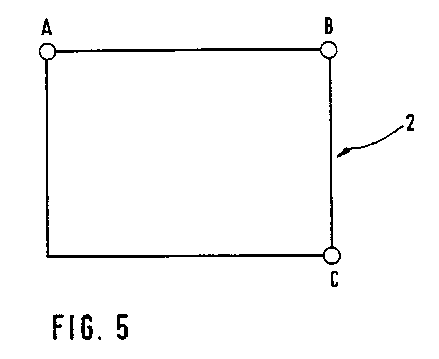

Zwei Ausführungsbeispiele der Erfindung sind in der Zeichnung anhand mehrerer Figuren dargestellt und in der nachfolgenden Beschreibung näher erläutert. Es zeigen Figur 1 einen Scheinwerfer im Längsschnitt, Figur 2 den in Figur 1 mit II bezeichneten Ausschnitt des Scheinwerfers als Längsschnitt durch ein erstes Ausführungsbeispiel einer Stellvorrichtung, Figur 3 den in Figur 1 mit II bezeichneten Ausschnitt des Scheinwerfers als Längsschnitt durch ein zweites Ausführungsbeispiel, Figur 4 den Ausschnitt II als Längsschnitt durch eine Variante des zweiten Ausführungsbeispiels und Figur 5 einen Reflektor in stark schematischer Darstellung in der Voransicht.

Beschreibung der Ausführungsbeispiele

Ein Scheinwerfer für Kraftfahrzeuge ist in Figur 1 vereinfacht dargestellt. Der Scheinwerfer besteht aus einem Scheinwerfergehäuse 1, einem Reflektor 2 mit Streuscheibe 3 und einer im Scheinwerfergehäuse 1 angeordneten elektromotorischen Stellvorrichtung 5 zur Einstellung der Neigung des Reflektors 2.

Die elektromotorische Stellvorrichtung 5 besteht aus einem quer zu einer die Einstellrichtung bestimmenden Achse 6 angeordneten Elektromotor 7 und einem aus einem ebenfalls quer zur Achse 6 angeordneten kleinen Schneckenrad 8 und einem in Achsrichtung 6 angeordneten großen Zahnrad 9 mit Stirnverzahnung gebildeten Untersetzungsgetriebe. Das Zahnrad 9 ist in Achsrichtung 6 relativ zum Schneckenrad 8 verschiebbar. Der Elektromotor 7 und das Untersetzungsgetriebe sind in einem Gehäuseteil 12 untergebracht. Vom Gehäuseteil 12 steht in Achsrichtung 6 zum Reflektor 2 ein Gewindezapfen 14 ab. Das Zahnrad 9 ist mit einer in Achsrichtung 6 sich erstreckenden Gewindebohrung 15 versehen und auf dem Gewindezapfen 14 aufgeschraubt. Das Schneckenrad 8 wird vom Elektromotor 7 angetrieben und greift in die Stirnverzahnung des Zahnrads 9 ein.

In dem in Figur 2 dargestellten ersten Ausführungsbeispiel weist das Zahnrad 9 einen zum Reflektor 2 weisenden zylindrischen Schaft 16 mit einem Außgengewinde auf. Auf den Schaft 16 ist ein mit dem Reflektor 2 drehbeweglich, jedoch um die Achse 6 verdrehsicher gekoppeltes und mit einem Innengewinde versehenes Gelenkteil 18 aufgeschraubt . Das Gewinde zwischen dem Gelenkteil 18 und dem Schaft 16 ist gegenläufig zum Gewinde zwischen dem Zahnrad 19 und dem Gehäuseteil 12.

Vom Scheinwerfergehäuse 1 steht, wie in Figur 2 dargestellt, nach innen ein Zapfen 28 mit einer Ringnut 29 ab. Über den Zapfen 28 ist ein am Gehäuseteil 12 angeformter mit zwei Längsschlitzen 31 versehener Hohlzapfen 30 gestülpt, der mit an seinem Ende zum Zapfen 28 hin abstehenden Vorsprüngen 32 in die Ringnut 29 eingerastet ist. Auf der zum Reflektor 2 weisenden Seite des Gehäuseteils 12 ist ein erstes Kegelrad 25 angeformt. Senkrecht zur Achse 6 ragt eine Einstellwelle 26 in das Scheinwerfergehäuse 1, an deren Ende ein zweites Kegelrad 27 angeformt ist, das mit dem ersten Kegelrad 25 ständig in Eingriff steht. Die Einstellwelle 26 ist in einer Bohrung 34 des Scheinwerfergehäuses 1 drehbar gelagert. Die Einstellwelle 26 weist im Bereich der Bohrung 34 eine Ringnut 35 auf und die Bohrung ist mit einer Ringnut 36 versehen und zwischen den Ringnuten 35 und 36 ist ein O-Ring 37 eingespannt. Durch den O-Ring 37 wird die Drehbewegung der Einstellwelle 26 gehemmt und die Einstellwelle 26 axial im Scheinwerfergehäuse 1 gesichert. Auf ihrer aus dem Scheinwerfergehäuse 1 ragenden Stirnseite ist die Einstellwelle 26 mit einem Innensechskant 38 versehen. Im Gehäuseteil 12 ist in eine Führung ein Potentiometer 40 in Achsrichtung 6 eingeschoben. Das Potentiometer 40 ist über einen Bügel 41 in Achsrichtung 6 mit dem Zahnrad 9 verbunden. Auf dem Umfang das Gehäuseteils 12 ist ein Schleifring 42 und auf der dem Schleifring radial gegenüberliegenden Innenseite des Scheinwerfergehäuses 1 ein Schleifer 43 angeordnet. Mit dem Schleifring 42 ist eine Leiterplatte 44 verbunden, die zur Kontaktierung des Elektromotors 7 und des Potentiometers 40 dient. Der Schleifer 43 ist über elektrische Leitungen 45 mit einem Zentralstecker 46 und über diesen mit einer nicht dargestellten Spannungsquelle und einer Steuerung verbunden.

Die Funktion der Stellvorrichtung wird im folgenden erläutert. Durch den Elektromotor 7 und das Schneckenrad 8 angetrieben, wird das Zahnrad 9 in eine Drehbewegung um die Achse 6 versetzt. Infolge des Gewindes zwischen dem Zahnrad und dem Gehäuseteil 12 bewegt sich das Zahnrad 9, je nach Drehrichtung des Elektromotors 7, in Achsrichtung 6 hin oder her.

Das Gelenkteil 18 bewegt sich dabei nicht nur um den Weg, den das Zahnrad 19 zurücklegt, sondern zusätzlich auch um den Weg, den das Gelenkteil 18 infolge des Gewindes zwischen dem Gelenkteil 18 und dem Schaft 16 relativ zum Schaft 16 zurücklegt. Damit ist ein vergrößerter Einstellbereich des Reflektors 2 erreicht.

Eine Grundeinstellung des Reflektors 2 ist über die Einstellwelle 26 möglich. Bei einer Betätigung der Einstellwelle 26 wird über die Kegelräder 25 und 27 das Gehäuseteil 12 relativ zum Scheinwerfergehäuse 1 um den Zapfen 28 verdreht. Durch die Selbsthemmung des Untersetzungsgetriebes erfolgt dabei über das Gewinde zwischen dem Zahnrad 9 und dem Gelenkteil 18 eine Verschiebung des Gelenkteils 18 in Achsrichtung 6. Der zwischen der Einstellwelle 26 und der Bohrung 34 eingespannte O-Ring 37 verhindert ein unbeabsichtigtes Verdrehen der Einstellwelle 36.

In Figur 3 ist ein zweites Ausführungsbeispiel des Scheinwerfers mit einem in gleicher Weise wie bei Figur 2 ausgeführten Untersetzungsgetriebe dargestellt. Das Gehäuseteil 212, in dem wieder der Elektromotor 7 und das Untersetzungsgetriebe angeordnet sind, ist nun aber fest mit dem Scheinwerfergehäuse 201 verschraubt. Damit entfallen dann der Schleifring 42 und der Schleifer 43, die durch Festanschlüsse 242 ersetzt werden können. Das Zahnrad 209 weist ferner, abweichend von Figur 2, auf seiner zum Reflektor 2 weisenden Seite eine Kugelzapfenaufnahme 220 auf, in die ein Kugelzapfen 221 mit seinem kugeligen Ende eingeknüpft ist. Über die Kugelzapfenaufnahme 220 ist ein Sicherungsring 224 geschoben. Das Gelenkteil 218 ist mit dem Reflektor 2 drehbeweglich, jedoch um die Achse 6 verdrehsicher gekoppelt und mit dem Kugelzapfen 221 über ein Gewinde 229 verbunden. Die Einstellwelle 226 ragt senkrecht zur Achse 6 in das Scheinwerfergehäuse 201 und greift in ein Umlenkungsgetriebe 228 ein, mit dem auch der Kugelzapfen 221 gekoppelt ist. Durch das Umlenkungsgetriebe 228 wird die Drehbewegung der Einstellwelle 226 in eine Drehbewegung des Kugelzapfens 221 um die Achse 6 umgewandelt. Das Umlenkungsgetriebe 228 besteht aus zwei rechtwinklig zueinander in einem Getriebegehäuse 230 angeordneten Kegelrändern 231, 232, von denen ein auf der Achse 6 angeordnet ist. Das Kegelrad 231 ist auf dem Kugelzapfen 221 entlang der Achse 6 verschiebbar geführt. Der Kugelzapfen 221 ist mit dem Kegelrad 231 über einen Vierkant 233 in Umfangsrichtung gekoppelt. In das Kegelrad 232 greift die Einstellwelle 226 mit einem an ihrem Ende angeformten Vierkant 227 ein. Die Drehbewegung des Zahnrads 209 wird über das Gewinde zwischen dem Zahnrad 209 und dem Gehäuseteil 212 in eine axiale Bewegung des Zahnrads 209 in Achsrichtung 6 umgewandelt. Die Drehbewegung des Zahnrads 209 wird nicht auf den Kugelzapfen 221 übertragen, da dieser in der Kugelzapfenaufnahme 220 drehbar gelagert ist.

Eine Grundeinstellung des Reflektors 2 ist über die Einstellwelle 226 möglich. Bei einer Betätigung der Einstellwelle 226 wird der Kugelzapfen 221 um die Achse 6 verdreht und somit das Gelenkteil 218 über das Gewinde 229 in Achsrichtung 6 bewegt.

Bei einer in Figur 4 dargestellten Variante des zweiten Ausführungsbeispiels wird auf die Grundeinstellung des Reflektors durch Eingriff in die Stellvorrichtung verzichtet, so daß die Einstellwelle und das Umlenkungsgetriebe hier entfallen. Der Kugelzapfen 321 weist einen zum Reflektor 2 weisenden Schaft 316 mit einer Kugelkopfaufnahme 318 auf, die einen am Reflektor 2 angeformten Kugelkopf 322 aufnimmt. Die Einstellung des Reflektors 2 über die Stellvorrichtung erfolgt wie beim zweiten Ausführungsbeispiel. Die Grundeinstellung des Reflektors 2 wird an den oberen Lagerungen A, B des Reflektors, in Figur 5 schematisch dargestellt, vorgenommen. Eine Grundeinstellung in horizontaler Richtung ist dabei durch eine Verstellung der Lagerung A möglich, während zu einer Grundeinstellung im vertikaler Richtung beide Lagerungen A und B jeweils gleichsinnig verstellt werden müssen. Im Punkt C greift die Stellvorrichtung an.

**Patentansprüche**

1. Scheinwerfer für Kraftfahrzeuge mit einer elektromotorischen Stellvorrichtung (5) zur Einstellung eines im Scheinwerfergehäuse (1;201) angeordneten Reflektors (2) wobei die Stellvorrichtung (5) in einem Gehäuseteil (12;212) einen Elektromotor (7) und ein mit dem Reflektor (2) verbundenes Untersetzungsgetriebe aufweist, durch das ein Stellelement (16;221) zur Verstellung des Reflektors (2) betätigbar ist, wobei das Untersetzungsgetriebe aus einem vom Elektromotor (7) angetriebenen, quer zur Achse (6) des Stellelements (16;221) angeordneten kleinen Schneckenrad (8) und einem auf der Achse (6) angeordneten großen Zahnrad (9;209) mit Stirnverzahnung besteht und das Gehäuseteil (12;212) der Stellvorrichtung (5) im Scheinwerfergehäuse (1;201) angeordnet und gegen Verdrehen um die Achse (6), Verschieben in Achsrichtung (6) und quer dazu gesichert mit dem Scheinwerfergehäuse (1;201) verbunden ist, dadurch gekennzeichnet, daß das große Zahnrad (9;209) mit dem Gehäuseteil (12;212) über ein Gewinde (14,15) verbunden ist, durch das bei einer Drehbewegung des Zahnrads (9;219) eine Bewegung des Zahnrads (9;209) in Achsrichtung (6) bewirkt wird und daß das Zahnrad (9;209) auf seiner dem Gehäuseteil (12;212) abgewandten Seite über das Stellelement (16;221) mit dem Reflektor (2) verbunden ist, wobei bei einer Bewegung des Zahnrads (9;209) in Achsrichtung (6) die Neigung des Reflektors (2) verstellt wird.

2. Scheinwerfer nach Anspruch 1, dadurch gekennzeichnet, daß das Zahnrad (9;209) eine sich in Achsrichtung (6) erstreckende, zum Gehäuseteil (12;212) weisende Bohrung (15) mit einem Innengewinde und das Gehäuseteil (12;212) einen in Achsrichtung (6) zum Zahnrad (9;209) abstehenden Zapfen (14) mit einem Außengewinde aufweist.

3. Scheinwerfer nach Anspruch 2, dadurch gekennzeichnet, daß das Zahnrad (9) als Stellelement einen zum Reflektor (2) weisenden zylindrischen Schaft (16) mit einem Außengewinde aufweist, auf den ein mit einem Innengewinde versehenes und mit dem Reflektor (2) wenigstens mittelbar drehbeweglich gekoppeltes, jedoch um die Achse (6) gegen Verdrehen gesichertes Gelenkteil (18) aufgeschraubt ist, wobei das Gewinde zwischen dem Gelenkteil (18) und dem Schaft (16) gegenläufig zum Gewinde zwischen dem Zahnrad (9) und dem Gehäuseteil (12) ist.

4. Scheinwerfer nach Anspruch 3, dadurch gekennzeichnet, daß das Gehäuseteil (12) im Scheinwerfergehäuse (1) um die Achse (6) drehbar gelagert ist und am Umfang eine erste Verzahnung (25) aufweist in die eine zweite, an einem Ende eines Einstellteils (26) angeordnete Verzahnung (27) ständig eingreift, wobei das Einstellteil (26) im Scheinwerfergehäuse (1) gelagert und nach Überschreiten einer bestimmten Umfangskraft drehbar ist und das andere Ende des Einstellteils (26) zu dessen Betätigung aus dem Scheinwerfergehäuse (1) ragt.

5. Scheinwerfer nach Anspruch 4, dadurch gekennzeichnet, daß das Gehäuseteil (12) auf seiner dem Reflektor (2) zugewandten Seite ein erstes Kegelrad (25) aufweist, in das das Einstellteil (26) über ein an seinem in das Scheinwerfergehäuse (1) ragenden Ende angeordnetes zweites Kegelrad (27) eingreift.

6. Scheinwerfer nach Anspruch 4 oder 5, dadurch gekennzeichnet, daß das Scheinwerfergehäuse (1) einen zum Reflektor (2) hin abstehenden Zapfen (28) mit einer Ringnut (29) aufweist und das Gehäuseteil (12) einen zum Scheinwerfergehäuse (1) hin abstehenden, koaxial zur Achse (6) angeordneten Holzapfen (30) mit mindestens einem Längsschlitz (31) aufweist, der über den Zapfen (28) gestülpt und mit von ihm zur Achse (6) hin bestehenden Vorsprüngen (32) in der Ringnut (29) eingerastet ist.

7. Scheinwerfer nach Anspruch 2, dadurch gekennzeichnet, daß das Gehäuseteil (212) mit dem Scheinwerfergehäuse (201) in Umfangsrichtung gekoppelt ist, daß das Zahnrad (209) einen zum Reflektor (2) weisenden Schaft mit einer Kugelzapfenaufnahme (220) aufweist, in die ein als Stellelement dienender Kugelzapfen (221) mit seinem kugeligen Ende eingeknüpft ist und daß mit dem anderen Ende des Kugelzapfens (221) ein mit dem Reflektor (2) wenigstens mittelbar drehbeweglich gekoppeltes Gelenkteil (218) verbunden ist.

8. Scheinwerfer nach Anspruch 7, dadurch gekennzeichnet, daß das Gelenkteil (218) um die Achse (6) verdrehsicher mit dem Reflektor (2) und über ein Gewinde (229) mit dem Kugelzapfen (221) verbunden ist, daß quer zum Kugelzapfen (221) ein Einstellteil (226) in das Scheinwerfergehäuse (201) ragt, das mit seinem einen Ende in ein Umlenkungsgetriebe (228) eingreift, mit dem auch der Kugelzapfen (221) gekoppelt ist, wobei das Einstellteil (226) im Scheinwerfergehäuse (201) gelagert und nach Überschreiten einer bestimmten Umfangskraft drehbar ist, das andere Ende des Einstellteils (226) zu dessen Betätigung aus dem Scheinwerfergehäuse (201) ragt und eine Drehbewegung des Einstellteils (226) über das Umlenkungsgetriebe (228) in eine Drehbewegung des Kugelzapfens (221) umgesetzt wird.

9. Scheinwerfer nach einem der Ansprüche 4, 5, 6 oder 8, dadurch gekennzeichnet, daß das Scheinwerfergehäuse (1, 201) eine Bohrung (34) zum Durchtritt des Einstellteils (26, 226) und sowohl das Einstellteil im Bereich der Bohrung (34) eine Ringnut (35) als auch die Bohrung (34) eine Ringnut (36) aufweist und daß zwischen den beiden Ringnuten (35, 36) ein Ring (37) aus elastischem Material eingespannt ist.

10. Scheinwerfer nach einem der vorstehenden Ansprüche, dadurch gekennzeichnet, daß in einem dem Zahnrad (9;209) radial gegenüberliegenden Bereich des Gehäuseteils (12;212) ein Potentiometer (40) angeordnet ist, das in Achsrichtung (6) im Gehäuseteil (12;212) geführt und über einen Bügel (41) mit dem Zahnrad (9;209) in Achsrichtung (6) verbunden ist.

11. Scheinwerfer nach einem der Ansprüche 2 bis 10, dadurch gekennzeichnet, daß zur Kontaktierung des Elektromotors (7) und des Potentiometers (40) auf der Außenseite des Gehäuseteils (12) ein Schleifring (42) und auf der dem Schleifring gegenüberliegenden Innenseite des Scheinwerfergehäuses (1) ein Schleifer (43) angebracht ist und der Elektromotor (7) und das Potentiometer (40) über elektrische Leitungen und eine Leiterplatte (44) mit dem Schleifring (42) verbunden sind.

## Claims

1. Headlight for motor vehicles, having an electric motor actuating device (5) for adjusting a reflector (2) which is arranged in the headlight housing (1;201), the actuating device (5) having an electric motor (7) in a housing part (12;212), and having a step-down transmission, connected to the reflector (2), by means of which an actuating element (16;221) can be operated in order to displace the reflector (2), the step-down transmission consisting of a small worm gear (8) which is driven by the electric motor (7) and is arranged at right angles to the axis (6) of the actuating element (16;221) and of a large gear wheel (9;209) which is arranged on the axis (6) and has spur gearing, and the housing part (12;212) of the actuating device (5) being arranged in the headlight housing (1;201), and being connected to the headlight housing (1;201) so that it is protected against rotation about the axis (6), displacement in the axial direction (6) and at right angles thereto, characterised in that the large gear wheel (9;209) is connected to the housing part (12;212) via a thread (14,15), by means of which, in the event of a rotational movement of the gear wheel (9;219), the gear wheel (9;209) is caused to move in the axial direction (6), and in that the gear wheel (9.;209) is connected to the reflector (2) via the actuating element (16;221), on its side facing away from the housing part (12;212), the inclination of the reflector (2) being displaced in the event of a movement of the gear wheel (9;209) in the axial direction (6).

2. Headlight according to Claim 1, characterised in that the gear wheel (9;209) has a hole (15) which extends in the axial direction (6), points towards the housing part (12;212) and has an internal thread, and the housing part (12;212) has a peg (14) which projects with respect to the gear wheel (9;209) in the axial direction (6) and has an external thread.

3. Headlight according to Claim 2, characterised in that the gear wheel (9) has, as the actuating element, a cylindrical shaft (16) which points towards the reflector (2) and has an external thread, onto which a joint part (18) is screwed which is provided with an internal thread and is coupled in a rotationally moving manner at least indirectly to the reflector (2), but is protected against rotation about the axis (6), the thread running between the joint part (18) and the shaft (16) in the opposite direction to the thread between the gear wheel (9) and the housing part (12).

4. Headlight according to Claim 3, characterised in that the housing part (12) is supported in the headlight housing (1) such that it can rotate about the axis (6), and has first gearing (25) on the circumference into which second gearing (27), which is arranged on the end of the adjusting part (26), continuously engages, the adjusting part (26) being supported in the headlight housing (1) and being able to rotate once a specific circumferential force is exceeded, and the other end of the adjusting part (26) projecting out of the headlight housing (1) in order to operate it.

5. Headlight according to Claim 4, characterised in that the housing part (12) has a first bevel gear (25) on its side facing the reflector (2), into which the adjusting part (26) engages via a second bevel gear (27) which is arranged on its end which projects into the headlight housing (1).

6. Headlight according to Claim 4 or 5, characterised in that the headlight housing (1) has a peg (28) projecting towards the reflector (2) with an annular groove (29), and the housing part (12) has a hollow peg (30) which projects towards the headlight housing (1), is arranged coaxially with respect to the axis (6) and has at least one longitudinal slot (31) which is inverted over the peg (28), and is latched into the annular groove (29) by means of protrusions (32) which project from it towards the axis (6).

7. Headlight according to Claim 2, characterised in that the housing part (212) is coupled in the circumferential direction to the headlight housing (201), in that the gear wheel (209) has a shaft pointing towards the reflector (2) with a ball-ended peg holder (220), into which a ball-ended peg (221), which is used as the actuating element, is connected at its ball end, and in that a joint part (218), which is coupled at least indirectly to the reflector (2) such that it can rotate, is connected to the other end of the ball-ended peg (221).

8. Headlight according to Claim 7, characterised in that the joint part (218) is connected to the ball-ended peg (221) via a thread (229) and to the reflector (2) such that it cannot rotate about the axis (6), in that an adjusting part (226) projects at right angles to the ball-ended peg (221) into the headlight housing (201), which adjusting part engages at its one end into a deflection transmission (228), to which the ball-ended peg (221) is also coupled, the adjusting part (226) being supported in the headlight housing (201) and being able to rotate once a specific circumferential force is exceeded, the other end of the adjusting part (226) projecting out of the headlight housing (201) in order to operate it, and a rotational movement of the adjusting part (226) being converted via the deflection transmission (228) into a rotational movement of the ball-ended peg (221).

9. Headlight according to one of Claims 4, 5, 6 or 8, characterised in that the headlight housing (1, 201) has a hole (34) for the adjusting part (26, 226) to pass through, and the adjusting part has an annular groove (35) in the region of the hole (34), in addition to the hole (34) having an annular groove (36), and in that a ring (37) of elastic material is clamped in between the two annular grooves (35, 36).

10. Headlight according to one of the preceding claims, characterised in that a potentiometer (40) is arranged in a region of the housing part (12;212) which is radially opposite the gear wheel (9;209), which potentiometer is guided in the axial direction (6) in the housing part (12;212) and is connected via a clip (41) to the gear wheel (9;209) in the axial direction (6).

11. Headlight according to one of Claims 2 to 10, characterised in that, in order to make contact with the electric motor (7) and with the potentiometer (40), a slip ring (42) is fitted on the outside of the housing part (12) and a wiper (43) is fitted on the inside of the headlight housing (1) opposite the slip ring, and the electric motor (7) and the potentiometer (40) are connected to the slip ring (42) via electrical leads and a printed-circuit board (44).

Revendications

1. Phare pour véhicules automobile comportant un dispositif de réglage (5) à moteur électrique pour régler un réflecteur (2) placé dans le corps (1, 201) du phare, le dispositif de réglage (5) comprenant un moteur électrique (7) et un réducteur relié au réflecteur (2), l'ensemble étant logé dans une partie de corps (12, 212) pour actionner un élément de réglage (16, 221) et régler le réflecteur (2), le réducteur se composant d'une petite roue à vis (8) entraînée par le moteur électrique (7) et montée transversalement à l'axe (6) de l'élément de réglage (16, 221) et d'une grande roue dentée (9, 209) montée sur l'axe (6) avec denture droite et la partie de corps (12, 212) du dispositif de réglage (5) est logée dans le corps (1, 201) du phare en étant reliée à celui-ci de manière bloquée en rotation autour de l'axe (6), en translation dans la direction de l'axe (6) et transversalement en étant reliée au corps (1, 201) du phare, caractérisé en ce que la grande roue dentée (9, 209) est reliée à la partie de corps (12, 212) par un filetage (14, 15) qui transforme le mouvement de rotation de la roue dentée (9, 209) en un mouvement de la roue dentée (9, 209) dans la direction axiale et en ce que sur son côté opposé à la partie de boîtier (12, 212) la roue dentée (9, 209) est reliée au réflecteur (2) par l'élément de réglage (16, 221) et le mouvement de la roue dentée (9, 209) dans la direction axiale (6) règle l'inclinaison du réflecteur (2).

2. Phare selon la revendication 1, caractérisé en ce que la roue dentée (9, 209) comporte un perçage (15) avec un filetage intérieur s'étendant dans la direction de l'axe (6) par rapport à la partie de corps (12, 212) et cette partie de corps (12, 212) comporte un téton (14) en saillie dans la direction de l'axe (6) vers la roue dentée (9, 209) avec un filetage extérieur.

3. Phare selon la revendication 2, caractérisé en ce que la roue dentée (9) comporte comme élément de réglage, une tige (16) cylindrique tournée vers le réflecteur (2) avec un filetage extérieur sur lequel est vissée une pièce d'articulation (18) munie d'un filetage intérieur et couplée au moins indirectement, de manière mobile en rotation, avec le réflecteur (2) tout en étant bloquée en rotation sur l'axe (6), le filetage entre la pièce d'articulation (18) et la tige (16) étant opposé au filetage entre la roue dentée (9) et la partie de corps (12).

4. Phare selon la revendication 3, caractérisé en ce que la partie de corps (12) est montée à rotation sur l'axe (6) dans le corps (1) du phare et comporte au début une première denture (25) dans laquelle est en prise en permanence une seconde denture (27) prévue à l'extrémité d'une pièce de réglage (26), la pièce de réglage (26) étant montée dans le corps (1) du phare et, après dépassement d'une certaine force périphérique, elle peut tourner et l'autre extrémité de la pièce de réglage (26) est en saillie du corps de phare (1) pour pouvoir être actionnée.

5. Phare selon la revendication 4, caractérisé en ce que la partie de corps (12) comporte une première roue conique (25) sur son côté opposé au réflecteur (2) avec laquelle engrène la pièce de réglage (26) par l'intermédiaire d'une seconde roue conique (27) prévue à son extrémité pénétrant dans le corps de phare (1).

6. Phare selon la revendication 4 ou 5, caractérisé en ce que le corps de phare (1) comporte un téton (28) en saillie vers le réflecteur (2) avec une rainure annulaire (29) et la partie de corps (12) comporte un manchon (30) co-axial à l'axe (6), en saillie par rapport au corps de phare (1), ce manchons ayant au moins une fente longitudinale (31) et il est emmanché par dessus le téton (28) et ses saillies (32) tournées vers l'axe (6) s'accrochent dans la rainure annulaire (29.

7. Phare selon la revendication 2, caractérisé en ce que la partie de corps (212) est couplée dans la direction périphérique avec le corps (201) du phare, la roue dentée (209) comporte un axe tourné vers le réflecteur (2) et ayant une coupelle à rotule (220) dans laquelle vient s'engager l'extrémité sphérique d'un téton à rotule (221) constituant l'élément de réglage, l'autre extrémité du téton à rotule (221) étant reliée à une pièce d'articulation (218) couplée libre en rotation de manière au moins indirecte avec le réflecteur (2).

8. Phare selon la revendication 7, caractérisé en ce que la pièce d'articulation (218) est reliée solidairement en rotation sur l'axe (6) avec le réflecteur (2) et par un filetage (229) avec le téton à rotule (221) et en ce que transversalement au téton à rotule (221), une pièce de réglage (226) pénètre dans le corps (201) du phare, dont une extrémité pénètre dans une transmission de renvoi (228) en étant également couplée au téton à rotule (221), la pièce de réglage (226) étant logée dans le corps de phare (201), et après dépassement d'une certaine force périphérique , elle peut tourner, et l'autre extrémité de la pièce de réglage (226) qui vient en saillie du corps (201) du phare pour pouvoir être manoeuvrée, et le mouvement de rotation de la pièce de réglage (226) est transformé en un mouvement de rotation du téton à rotule (221) par l'intermédiaire de la transmission de renvoi (228).

9. Phare selon l'une des revendications 4, 5, 6, 8, caractérisé en ce que le corps (1, 201) du phare comporte un perçage (34) pour le passage de la pièce de réglage (26, 226) et la pièce de réglage comporte au niveau de perçage (34), une rainure annulaire (35) et le perçage (34) une rainure annulaire (36), un joint (37) en une matière élastique étant placé entre les deux rainures annulaires (35, 36).

10. Phare selon l'une des revendications précédentes, caractérisé en ce que dans une zone du corps (12, 212) radialement en regard de la roue dentée (9, 209), il y a un potentiomètre (40) guidé dans la partie de corps (12, 212) suivant la direction de l'axe (6), en étant relié dans la direction de l'axe (6) à la roue dentée (9, 209) par un étrier (41).

11. Phare selon l'une des revendications 2 à 10, caractérisé en ce que pour brancher le moteur électrique (7) et le potentiomètre (40), il est prévu une bague de frottement (42) sur la partie extérieure de la partie de corps (12) et sur le côté intérieur du corps de phare (1), en regard de la bague de frottement, il est prévu un balai (43), le moteur (7) et le potentiomètre (40) étant reliés à la bague de frottement (42) par des conducteurs électriques et une plaque de circuits imprimés (44).

FIG. 1

FIG. 2

FIG. 3

FIG. 4

FIG. 5